# EUROPEAN PATENT SPECIFICATION

(11) **EP 3 556 875 B1**
(45) Date of publication and mention of the grant of the patent: **16.12.2020**
(21) Application number: 18167947.3
(22) Date of filing: 18.04.2018
(51) Int. Cl.: C22C 21/06, F16B 19/10

(54) **FASTENER MADE OF ALUMINIUM ALLOY COMPRISING SCANDIUM**
BEFESTIGUNGSELEMENT AUS ALUMINIUMLEGIERUNG MIT SCANDIUM
PIÈCE DE FIXATION EN ALLIAGE D'ALUMINIUM CONTENANT DU SCANDIUM

(43) Date of publication of application: 23.10.2019
(73) Proprietor: Newfrey LLC, New Britain, CT 06053 (US)
(72) Inventor: RAMASAMY, Sivakumar, 61381 Friedrichsdorf (DE); THIYAGARAJAN, Gnanasekar, 61381 Friedrichsdorf (DE); LANGAN, Timothy James Dr., Catonsville Maryland 21228 (US)
(74) Representative: SBD IPAdmin

(56) References cited:
- CA-A1- 2 398 667
- JP-A- H11 172 359
- US-A1- 2004 140 019
- US-A1- 2012 055 588

## Description

The present invention is directed to fasteners made of aluminium alloy comprising scandium as a constituent. The fastener can be of any type, and more particularly of any shape and form from nails to rivets, bolts, screws and nuts. More particularly, the fastener is adapted to secure at least a first component and a second component together, temporarily or permanently. The fastener comprises a securing portion adapted to be secured to the first and/or the second component, and a guiding portion adapted to be guided by a manipulator and/or a tool in order to set the securing portion in the first and/or the second component.

In several industries, and notably for automotive and industrial applications, fasteners are indispensable components. In the automotive industry for example, fastener are indispensable components to assemble together vehicle body panels and/or different components to vehicle bodies.

A major goal of the automotive manufacturers is to reduce the weight of passenger cars. The structural body of a vehicle is a vehicle's largest structure, and therefore ideal for weight reduction considerations to respond to environmental concerns, notably to reduce carbon emissions. The implementation of assembly processes or assembly elements (for instance fasteners) minimizing the body weight of the vehicle is a key characteristic to achieve a reduced weight, without sacrificing vehicle dynamics, durability and crash worthiness.

As a concrete measure of lightweight, it is effective to replace steel parts by light alloy such as aluminium alloy or magnesium alloy.

For example, when an automotive engine or transmission case should be constructed by using a magnesium or aluminium alloy to achieve lightweight, it is desirable to change fastening parts (bolts, rivets, nuts, for example) made of steel for their fastening for aluminium alloy based parts in view of prevention of electrolytic corrosion and weight reduction.

Document EP3121464 for example discloses a fastener, for instance a bolt, adapted to fasten a plurality of members. The fastener includes two portions. The first portion is made of a first aluminium alloy including between 0.005 wt% and 5.0 wt% zinc and between 0.6 wt% and 2.0 wt% magnesium. The second portion is made in a second aluminium alloy comprising between 2.0 wt% and 5.0 wt% magnesium and between 5.0 wt% and 10 wt% zinc. The second portion is joined to the first portion. Such fastener with two different portions made of two different materials are particularly complex to manufacture. JPH11172359 discloses a screw or a bolt made of a particular aluminium alloy containing Magnesium and manganese. US2004/140019 relates to high strength aluminum alloy rivets that do not depend upon precipitation heat treating techniques and that are capable of withstanding the extreme temperatures, corrosive environments, and extreme mechanical stresses inherent in high performance aerospace vehicles. US2012/055588 discloses an aluminum alloy and a method for producing the same, whereas the alloy comprises zinc. CA2398667 is directed to an aluminium alloy which may contain scandium.

Besides, numerous fasteners are used today to secure functional components or parts to the vehicle body. Reducing the weight of such fasteners shall significantly impact the global weight of a vehicle.

Therefore the need still remains to provide a light and corrosion resistant fastener, made in a material having a strength high enough to correctly secure the components, and able to be formed with conventional manufacture methods for fastener, notably by cold-forming.

It is hence an object of the present invention to at least alleviate the aforementioned shortcomings. More particularly one objective of the present invention is to provide a fastener or fastening device easy to manufacture, reliable and strong enough to be used for fastening parts, for several applications, including, but not limited to automotive and industrial fasteners, notably fasteners used in aerospace application or for vehicle parts.

To this aim, according to the invention, it is provided a fastener for securing at least a first component and a second component together, according to claim 1.

For example, fasteners such as threaded and/or blind fasteners, internal or external are considered. Besides, the fasteners can allow a permanent joining and/or a temporary joining. More particularly, the fasteners can be screws, nuts, bolts, rivets and/or blind fasteners, as notably used in the automotive industry. The fastener is notably a cold form fastener.

The applicant, in aim to achieve the above objective, conducted extensive studies regarding alloy compositions and constituents adapted to be used for fasteners. The studies revealed notably that the special rare earth element scandium (Sc) as a constituent in an aluminium alloy, and in a particular proportion, allows the manufacture of a fastener meeting all the necessary technical features. More particularly, the fastener as described above has a high strength and light weight. Tests and experiences have notably shown that a proportion of Scandium in the range of 0,03 to 0.55wt% enable a correct cold forming manufacture process. The strength needed for the fastener to correctly secure the components is increased. Such aluminium alloy with scandium demonstrates also good welding properties.

According to an embodiment, the concentration of Scandium is between 0.05 and 0.20wt%, for example between 0.10 and 0.20 percentage by weight. The concentration of Scandium may be of about 0,15 wt%. Such concentration of scandium is notably optimal to create enough ductility and high strength development during forming, for example cold forming, and to avoid any micro-cracking during a cold forming process. Such ranges allow a good compromise between material properties and material costs. According to another embodiment, the concentration of scandium is of 0,13 +/-0,02 wt%.

According to the invention, the aluminium alloy contains, in addition to aluminium and Scandium, the following constituents, in the concentrations indicated (in wt%):

| Mg | Mn | Zr | Zn |
|---|---|---|---|
| 4.0+/- 1.6 | 0.21 +/-0.1 | 0.15 +0.15/-0.05 | 0.21 +/0.1 |

According to an embodiment, the aluminium alloy contains, in addition to aluminium and Scandium, the following constituents, in the concentrations indicated (in wt%):

| Mg | Mn | Zr | Zn |
|---|---|---|---|
| 5.5+0.1/- 1.0 | 0.21 +/-0.1 | 0.15 +0.15/-0.05 | 0.21 +/0.1 |

According to an embodiment, the fastener has a shape formed by cold forming process.

According to an embodiment, a screw thread is formed on part of the securing portion. Depending on the application, the thread size may be between M0.5 and M39, more particularly between M3 and M39 according to ISO 965.

According to an embodiment, the fastener is a screw, a stud, a bolt, a nut, a blind rivet nut or a blind threaded insert.

According to an embodiment, the fastener is a blind rivet nut and the screw thread is formed on an inner surface of a hole formed at the centre of the fastener.

According to an embodiment, the fastener is a weld nut. More particularly, the fastener is a weld nut having a first surfaces adapted to be welded on a first component and a screw thread formed on an inner surface of a hole formed at the centre of the fastener, wherein the hole is adapted to receive the second component

According to an embodiment, the fastener is a self-piercing fastener.

According to an embodiment, the fastener is a self-piercing rivet.

According to an embodiment the tensile strength of the fastener is of at least 400 N/mm².

According to an embodiment, the Yield Strength of fastener is of at least 275 N/mm².

According to an embodiment, the density of the aluminium alloy is of less than 3.0 g/cm³.

Other characteristics and advantages of the invention will readily appear from the following description of embodiments, provided as non-limitative examples, in reference to the accompanying drawings.

In the drawings:
Fig. 1 shows a semi-sectional side view of a fastener according to a possible embodiment of the invention, the fastener being a blind rivet nut;
Fig. 2 shows a view of the blind rivet nut according to FIG. 1;
Fig. 3 shows a view of the blind rivet nut according to FIG. 1 secured to a first component;
Fig. 4 shows a second possible embodiment of a fastener according to the invention, the fastener being a self-piercing fastener, notably a self-piercing rivet;
Fig. 5 shows a third possible embodiment of a fastener according to the invention, the fastener being a stud having a threaded portion.
Fig. 6 shows a fourth possible embodiment of a fastener according to the invention, the fastener being a weld nut.
Fig. 7 shows a fifth embodiment of a fastener according to the invention, the fastener being a blind rivet.

On the different figures, the same reference signs designate identical or similar elements.

The figures schematically shows a fastener 10, 10', 10", 10'", 10"" according to several embodiments for securing at least a first component or element to a second component or element.

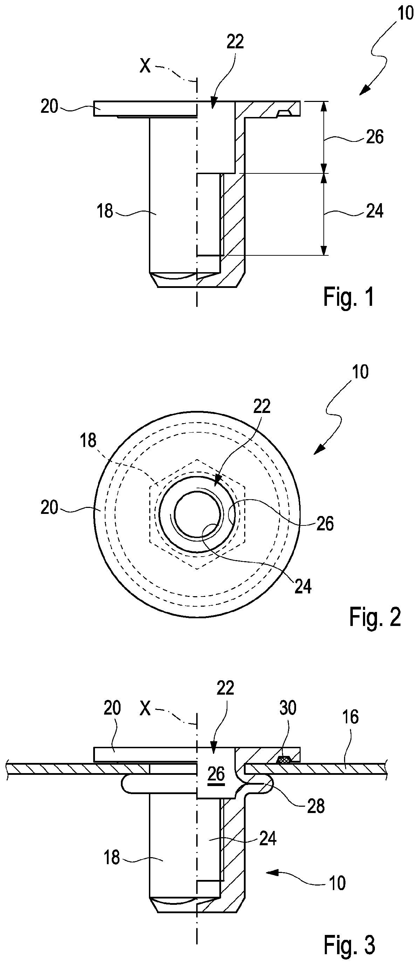

The fastener 10, 10', 10", 10"' is a one-piece element and comprises a securing portion 12 and a guiding portion 14. The securing portion 12 is adapted to be secured to the first and/or the second component 16 (for sake of clarity, only one of the first or second component 16 is represented in Fig. 3). The guiding portion 14 is adapted to be guided by a manipulator and/or a tool in order to set the securing portion 12 in the first and/or the second component 16.

The fastener 10, 10', 10", 10"', 10"" is made of an aluminium based alloy comprising scandium. Hereinafter, the fastener 10, 10', 10", 10'", 10"" according to the invention consisting of such an aluminium alloy is explained in detail together with the effects of alloy elements (or constituents) and reason for their limitation. In the present description, "wt%" shall represent the percentage by weight or mass unless otherwise indicated.

The scandium based aluminium alloy comprises the following elements or constituents in percent by weight:
Magnesium (Mg): 4.0 +/- 1.6 wt%
Manganese (Mn): 0,21 +/-0,1 wt%
Scandium (SC): between 0,03 and 0,55 wt%
Zirconium (Zr): 0,15 +0,15/-0,05 wt%
Zinc (Zn): 0,21+/-0,1 wt%
Aluminium (Al): Remaining wt%

Thus, the main element of the alloy remain the aluminium (Al) and the aluminium content depends on the contents of the others elements or constituents.

More particularly, the percentage by weight or mass of the Scandium is 0,15 +/-0,05.

These alloy compositions have critically balanced alloy chemistries which result in unique blends of desirable properties, which are particularly suitable for use in producing fastener components. These properties include increased thermal stability, microstructural stability, and stress- and creep-rupture strength, notably at elevated temperatures.

The scandium (Sc) content may be about 0,15 percent by weight and, and advantageously scandium is present in an amount from 0.10 to 0.20 or more precisely from 0,12 percent to 0,18 percent by weight. The presence of the scandium in such proportions allows to obtain lightness, strength, improves corrosion resistance, formability and increases recrystallization temperature. Due to the fact that the Scandium is particularly expensive, the percent of scandium in the aluminium alloy should be limited.

The magnesium (Mg) content is present in an amount up to 5.6 percent by weight. For example, the magnesium may be present in an amount from 2.4 to 5.6 percent by weight. According to an embodiment, the magnesium may be about 5,5 percent by weight. The magnesium is an element that contributes to improve a room temperature strength. The tendency of magnesium to creep at high-temperatures is eliminated by the addition of scandium. In a first composition, the magnesium content is for example about 5.5 +/-0.1 percent by weight. In a second composition, the magnesium content is for example about 4.75 +/-0.10 percent by weight.

The Zinc (Zn) content is an amount from 0,11 percent to 0,31 percent by weight. The zinc is an element which contributes to the strengthening of the alloy through precipitation of Al-Mg-Zn based particles during aging. Zinc improves surface treatment properties, The Zinc should not exceed 0,31 percent by weight to avoid corrosion resistance and strength decrease.

The manganese (Mn) content is an amount from 0,11 percent to 0,31 percent by weight. The manganese has the effect of improving the seizure resistance with dies during forging. If the proportion of Manganese is less than 0,11 percent by weight, the seizure resistance properties are not sufficient to ensure a correct forming. On the contrary, a rate of manganese exceeding 0,31 percent by weight may adversely affect the tensile properties and workability of the alloy.

The zirconium (Zr) content is an amount 0.10 to 0.30 percent by weight. The presence of the zirconium in such proportions allows a stabilizing effect of grain size. If the presence of zirconium is too low or too high, the tensile properties and stress corrosion cracking resistance needed for the fastener may not be obtained.

More particularly, the scandium based aluminium alloy may have, according to a first composition, constituents in percent by weight as follow:

| Mg | Mn | Sc | Zr | Zn | Al |
|---|---|---|---|---|---|
| 5,5 +/-0.10 | 0.21 +/-0.1 | 0,15 +/-0,05 | 0,15 - 0,05/+0,15 | 0.21 +/-0.1 | Remaining |

The first composition is particularly advantageous for fasteners such as blind rivet nuts, described notably below in reference to Fig. 1 to Fig. 3. However, the first composition may also be used for different type of fasteners as described above.

The scandium based aluminium alloy may have, according to a second composition, constituents in percent by weight as follow:

| Mg | Mn | Sc | Zr | Zn | Al |
|---|---|---|---|---|---|
| 4.75 +/-0.10 | 0.21 +/-0.1 | 0,15 +/-0,05 | 0,15 - 0,05/+0,15 | 0.21 +/-0.1 | Remaining |

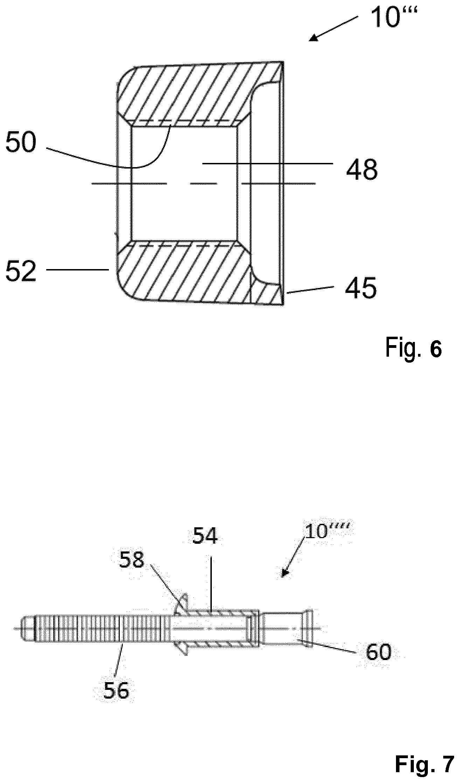

The second composition is particularly advantageous for fasteners such as weld nuts, described notably below in reference to Fig. 6. However, the second composition may also be used for different type of fasteners as described above.

The density of the material obtained may be below 3 g/cm³, for instance may be about 2,7 grams/cm³.

The fasteners 10, 10', 10", 10"', 10"" represented in the figures is made of the aluminium alloy described above. The shape of the fasteners 10, 10', 10", 10", 10"'" is for instance formed by a cold forming process. However, in other embodiments, other methods may be implemented. The fastener is for example produced by performing a wiredrawing process, a header process, and other known processes.

The fastener 10, 10', 10", 10"', 10"" may have a tensile strength of minimum 400 Newton per square millimetres (N/mm²). For instance, the tensile strength is between 400 and 650 N/mm². The tensile strength is the maximum tension-applied load the fastener can support along its axis prior to or coinciding with its fracture.

The fastener 10, 10', 10", 10'", 10""may have a yield strength of minimum 250 N/mm². For instance the yield strength is between 250 and 400 N/mm² The yield strength corresponds to the maximal stress that can be applied to the fastener along its axis before or when it exhibits 0,2% plastic deformation.

The fastener can be a rivet nut 10. For example, as illustrated in Fig 1 to Fig. 3, the fastener is a blind rivet nut 10. The blind rivet nut 10 can be anchored to a first or second component entirely from one side.

The blind rivet nut 10 represented in the drawing has an elongated shank 18 bearing a flange 20 at one end. The shank 18 may have a circular shape or the shape of a regular hexagonal or square or prism. The shank 18 can be conically pointed at its end opposed to the flange 20. Owing to a hexagonal outer contour, when the shank 18 is placed in a suitably shaped bore adapted in size to the cross-section of the shank 18, rotation of the shank in the bore is prevented. In other embodiments, longitudinal ribs may be provided on a portion of the outer contour (which may be circular) in order to prevent rotation of the shank in a bore. The pointed end facilitates introduction of the shank 20 into the bore.

The flange 20 may extend at right angles to the lengthwise axis X of the shank 18 and has the shape of a plane circular disk. Alternatively, the flange may have a polygonal shape, for example, square or hexagonal.

Through the flange 20 and the greater part of the length of the shank 18, a bore 22 extends, whose lengthwise axis coincides with the lengthwise axis of the shank 20. The bore 22 may be closed at the end of the shank. In other embodiments, the bore is a through hole and is not close at the end of the shank 18. The bore 22 may comprise a first bore segment 24 adjacent to the end of the shank opposite the flange 20, provided with an internal thread for screwing in a screw or bolt. The first bore segment 24 is adjoined by a second bore segment 26 extending to the top of the flange. The second bore segment 26 may have a constant diameter greater than the outside thread diameter of the internal thread of the first bore segment 24. However, in other embodiments, the diameter of the second bore segment is equal or smaller to the diameter of the first bore segment 24. The axial length of the second bore segment 26 may correspond to the smallest outside diameter of the shank, also known as the wrench width, but may alternatively be greater, for example, to make possible installation in a thicker part or the connection of several parts to each other.

The wall of the shank 18 surrounding the second bore segment 26 forms a deformable region capable of being deformed into a bulge 28 radially cambered outward for attachment of the blind rivet nut to a part as shown in Fig. 3. The smallest outside diameter of the shank 18 and the inside diameter of the bore segment are so coordinated with each other that the wall of the deformable region has a wall thickness of 4% to 6%, preferably 4.5% to 5%, of the smallest outside diameter D of the shank in the thinnest places. In this way, especially in connection with the production of the blind rivet nut as a cold-formed flow pressure part, a deformation behaviour of the deformable region is obtained that ensures a uniform contact of the flange 20 with the part connected with the blind rivet nut 10 and a dependable seal of the flange against the part. Deformations of the part that would lead to warping and non-uniform contact of the flange are avoided. By the specified ratio of wall thickness diameter, it is also brought about that the deformation bulge 28 formed attains an especially great radial extent, so that a stable anchorage of the blind rivet nut to the part can be obtained.

The flange of the blind rivet nut has an outside diameter corresponding to at least double the outside diameter of the wall. Here the thickness of the flange 20 is at least four to five times the least thickness of the wall. The peripheral contour of the flange is formed freely in the flow pressing of the blind rivet nut 10.

Fig. 3 shows the fastening of the blind rivet nut 10 to a sheet metal (also called component 16). For attachment, the first bore segment 24 of the blind rivet nut 10 may be first screwed onto the draw mandrel of a setting tool, and then the shank of the blind rivet nut is inserted into an opening in the part until the flange makes contact. Then the bore segment is moved by the draw mandrel in the direction of the flange, the setting tool coming to be supported on the flange. By this operation, the deformable region is compressed, so that it cambers radially outward and forms a bulge that comes to bear firmly on the part on the side away from the flange and thereby secures the blind rivet nut in the part.

To seal the blind rivet nut from the part, a sealing ring 30 may be arranged between the flange 20 and the part 16. The sealing ring 30 engages an annular groove of the flange, and is thereby held in a concentric position on the flange with respect to the blind rivet nut. The radially outward edge of the annular groove is somewhat lower than the thickness of the flange, forming an annular gap between the edge and the part, into which the sealing ring can enter when axially compressed between the blind rivet nut and the part during installation of the former.

In the embodiment depicted in Fig. 1 to Fig. 3, the securing portion 12 is formed by the outside portion of the shank and the bore. Indeed, a first or second component may be threaded into the second bore segment for its assembly to the fastener 10, whereas the bulge 28 formed on the outside portion of the shank 18 secures the fastener to the second or first component 16.

The blind rivet nut 10 may be obtained by a wire drawing process, as mentioned above.

The guiding portion 14 may be the first bore segment and/or the flange 20.

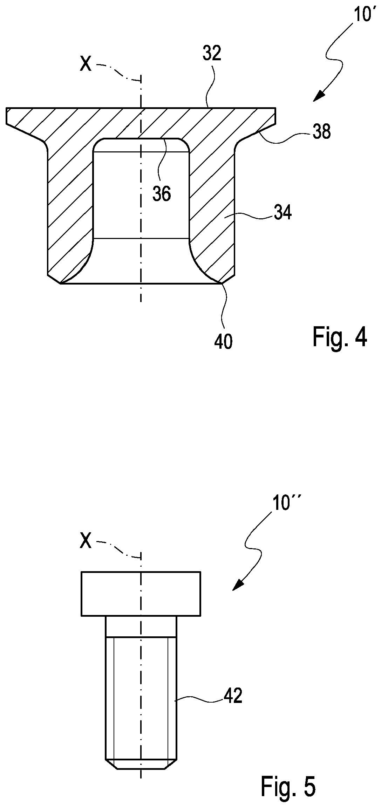

Another embodiment of a fastener 10' according to the invention is depicted in Fig. 4. Fig. 4 shows a self-piercing fastener 10', and more particularly a self-piercing rivet 10'. The self-piercing rivet 10' is preferably formed rotationally symmetrically about a longitudinal axis X. The self-piercing rivet 10' has a rivet head 32 and also a rivet shank 34, which adjoins the underside of the rivet head. The rivet head 32 has a top side, which is preferably configured as a planar, circular surface.

Furthermore, the rivet head 32 has a cylindrical outer head surface, which runs transversely to the head top side. Within the rivet shank, the rivet head 32 has a head underside 36, which in the present case is formed so as to taper in a frustoconical or rounded form. In other words, the rivet shank 34 therefore has a central borehole, which is in the form of a blind hole. The end face of this blind hole which lies opposite the head top side is referred to in the present case as head underside 36.

A further side of the rivet head 32 which is likewise remote from the head top side can be distinguished from the head underside 36. This side is referred to as shoulder underside 38. The rivet head 32 preferably has a shoulder which is peripheral about the longitudinal axis X and protrudes radially beyond the rivet shank 34. The shoulder underside 38 adjoins the outer head surface towards the top and the outer shank surface towards the bottom.

The rivet shank 34 is divided into a shank portion which adjoins the rivet head 32 and a cutting portion 40. The shank portion has a substantially hollow cylindrical form. The inner side thereof therefore has a cylindrical surface, which in the present case is referred to as inner shank surface. The cutting portion 40 has a comparatively tapered form at the bottom, since the self-piercing rivet 10' is punched with said end shank side into the work pieces (or component(s)) to be connected during the riveting process. In the embodiment of Fig. 4, the guiding portion 14 may be the head top side, whereas the securing portion 12 is formed by the rivet shank 34 and a portion of the rivet head 32 facing the work pieces.

Fig. 5 shows a further embodiment of a fastener according to the invention. More particularly, Fig. 5 depicts a threaded insert 10". The threaded insert 10" has a shaft and a head extending at one end of the shaft. The shaft has a portion comprising an external thread 42. The threaded insert can be a screw, a threaded stud, a clinching stud, a bolt...

In the embodiment of Fig. 5, the securing portion 12 may be the threaded shaft. The guiding portion may be the head.

Fig. 6 shows another embodiment of the fastener 10'" according to the invention. The fastener 10"' is a weld nut, as seen in Fig. 6 varies slightly from a conventional nut in that it has on its lower face 45 a peripheral ridge 46. To improve weld performance this ridge 46 may taper to an annular apex, having a "V" shaped configuration. The weld nut 10'" comprises a through hole 48 with an internal thread 50 adapted to receive a screw for example. The screw (not illustrated) can constitute the second component. The weld nut 10'" is adapted to be welded to a work piece (not illustrated) which can consist of a thin metal sheet. More particularly, the lower face 45 of the weld nut 10'" is adapted to be welded to a work piece wherein the screw may be inserted in the hole through the upper face 52.

Fig. 7 shows a further embodiment of the fastener. The fastener 10"" is a blind rivet, which is composed of a rivet body 54 and a mandrel 56. The rivet body 54 is attached to the mandrel 56 and has an elongated shank with a through-bore, in which the mandrel is located. Formed at a head end of the shank is a flange 58, which takes the form of an annular disk and is intended to contact a work piece. The side of the flange facing away from the shank may be provided with a flat support surface, whose purpose is supporting the forward end of a rivet setting tool. The end of the mandrel may have a self-piercing section 60 adapted to bore a hole into a work piece.

As described above, the present invention may include various embodiments and the like not described herein. Various changes in the design and the like may be made without departing from the appended claims.

## Claims

1. Fastener (10, 10', 10", 10"', 10"") for securing at least a first component and a second component together, the fastener comprising:
- a securing portion (12) adapted to be secured to the first and/or the second component, and
- a guiding portion (14) adapted to be guided by a manipulator or a tool in order to set the securing portion in the first and/or the second component,
wherein the securing portion and the handling portion form a one-piece element made of one unique aluminium alloy having a composition as follow:
Magnesium (Mg): 4.0 +/- 1.6 wt%
Manganese (Mn): 0,21 +/-0,1 wt%
Scandium (Sc): between 0,03 and 0,55 wt%
Zirconium (Zr): 0,15 +0,15/-0,05 wt%
Zinc (Zn): 0,21+/-0,1 wt%
Aluminium (Al): Remaining wt%

2. Fastener (10, 10', 10", 10"', 10"") according to claim 1, wherein the concentration of Scandium is between 0.10 and 0.20 percentage by weight.

3. Fastener (10, 10', 10", 10"', 10"") according to claim 2 wherein the concentration of Scandium is 0,15 percentage by weight.

4. Fastener (10, 10", 10'") according to any of the preceding claims, wherein a screw thread is formed on part of the securing portion.

5. Fastener (10, 10", 10'") according to any of the preceding claims, wherein the fastener is a screw, a stud, a bolt, a nut, a blind rivet nut or a blind threaded insert or a blind rivet.

6. Fastener (10) according to any of the preceding claims, wherein the fastener is a blind rivet nut (10) and a screw thread is formed on an inner surface of a hole formed at the center of the fastener.

7. Fastener (10"') according to any of the preceding claims, wherein the fastener (10"') is a weld nut having a first surface adapted to be welded on a first component and a screw thread formed on an inner surface of a hole formed at the center of the fastener, wherein the hole is adapted to receive the second component.

8. Fastener (10') according to any of the preceding claims, wherein the fastener is a self-piercing fastener.

9. Fastener according to any of claims 1 to 3, wherein the fastener is a self-piercing rivet (10').

10. Fastener (10, 10', 10", 10"', 10"") according to any of the preceding claims, wherein the tensile strength of the fastener is at least 400 N/mm².

11. Fastener (10, 10', 10", 10"', 10"") according to any of the preceding claims, wherein the Yield Strength of the fastener is at least 250 N/mm².

12. Fastener (10, 10', 10", 10"', 10"") according to any of the preceding claims, wherein the density of the fastener material is less than 3 g/cm³.

13. Process to manufacture a fastener according to any of the preceding claims, wherein the fastener is formed by a cold-forming process.

## Patentansprüche

1. Befestigungsmittel (10, 10', 10", 10"', 10"") zum Sichern mindestens einer ersten Komponente und einer zweiten Komponente aneinander, worin das Befestigungsmittel Folgendes umfasst:
- einen Sicherungsabschnitt (12), der dazu geeignet ist, an der ersten und/oder der zweiten Komponente gesichert zu werden, und
- einen Führungsabschnitt (14), der dazu geeignet ist, von einer Handhabungseinrichtung oder einem Werkzeug geführt zu werden, um den Sicherungsabschnitt in der ersten und/oder der zweiten Komponente einzustellen, worin der Sicherungsabschnitt und der Handhabungsabschnitt ein einstückiges Element bilden, das aus einer einzigartigen Aluminiumlegierung mit einer Zusammensetzung wie folgt hergestellt ist:
Magnesium (Mg): 4,0 +/- 1,6 Gewichtsprozent
Mangan (Mn): 0,21 +/- 0,1 Gewichtsprozent
Scandium (Sc): zwischen 0,03 und 0,55 Gewichtsprozent
Zirconium (Zr): 0,15 + 0,15/-0,05 Gewichtsprozent
Zink (Zn): 0,21 +/- 0,1 Gewichtsprozent
Aluminium (AI): verbleibende Gewichtsprozent

2. Befestigungsmittel (10, 10', 10", 10'", 10"") nach Anspruch 1, worin die Konzentration von Scandium zwischen 0,10 und 0,20 Gewichtsprozent beträgt.

3. Befestigungsmittel (10, 10', 10", 10'", 10"") nach Anspruch 2, worin die Konzentration von Scandium 0,15 Gewichtsprozent beträgt.

4. Befestigungsmittel (10, 10", 10'") nach einem der vorstehenden Ansprüche, worin ein Schraubengewinde auf einem Teil des Sicherungsabschnitts ausgebildet ist.

5. Befestigungsmittel (10, 10", 10'") nach einem der vorstehenden Ansprüche, worin das Befestigungsmittel eine Schraube, ein Zapfen, ein Bolzen, eine Mutter, eine Blindnietmutter oder ein Blindgewindeeinsatz oder eine Blindniete ist.

6. Befestigungsmittel (10) nach einem der vorstehenden Ansprüche, worin das Befestigungsmittel eine Blindnietmutter (10) ist und ein Schraubengewinde auf einer Innenfläche eines in der Mitte des Befestigungsmittels ausgebildeten Lochs ausgebildet ist.

7. Befestigungsmittel (10"') nach einem der vorstehenden Ansprüche, worin das Befestigungsmittel (10"') eine Schweißmutter mit einer ersten Oberfläche, die dazu geeignet ist, auf eine erste Komponente geschweißt zu werden, und einem auf einer Innenfläche eines in der Mitte des Befestigungsmittels ausgebildeten Lochs ausgebildeten Schraubengewinde ist, worin das Loch dazu geeignet ist, die zweite Komponente aufzunehmen.

8. Befestigungsmittel (10') nach einem der vorstehenden Ansprüche, worin das Befestigungsmittel ein selbstschneidendes Befestigungsmittel ist.

9. Befestigungsmittel nach einem der Ansprüche 1 bis 3, worin das Befestigungsmittel eine selbstschneidende Niete (10') ist.

10. Befestigungsmittel (10, 10', 10", 10'", 10"") nach einem der vorstehenden Ansprüche, worin die Zugfestigkeit des Befestigungsmittels mindestens 400 N/mm² beträgt.

11. Befestigungsmittel (10, 10', 10", 10'", 10"") nach einem der vorstehenden Ansprüche, worin die Streckfestigkeit des Befestigungsmittels mindestens 250 N/mm² beträgt.

12. Befestigungsmittel (10, 10', 10", 10'", 10"") nach einem der vorstehenden Ansprüche, worin die Dichte des Befestigungsmittelmaterials weniger als 3 g/cm³ beträgt.

13. Verfahren zur Herstellung eines Befestigungsmittels nach einem der vorstehenden Ansprüche, worin das Befestigungsmittel durch ein Kaltformverfahren gebildet wird.

## Revendications

1. Pièce de fixation (10, 10', 10", 10"', 10"") pour fixer au moins un premier composant et un second composant ensemble, la pièce de fixation comprenant :
- une partie de fixation (12) adaptée a être fixée au premier et/ou au second composant, et
- une partie de guidage (14) adaptée à être guidée par un manipulateur ou un outil afin de positionner la partie de fixation dans le premier et/ou le second composant,
dans laquelle la partie de fixation et la partie de manipulation forment un élément monobloc composé d'un alliage d'aluminium unique présentant une composition comme suit :
Magnésium (Mg) : 4,0 +/- 1,6 % en poids
Manganèse (Mn) : 0,21 +/- 0,1 % en poids
Scandium (Sc) : entre 0,03 et 0,55 % en poids
Zirconium (Zr) : 0,15 + 0,15/- 0,05 % en poids
Zinc (Zn) : 0,21 +/- 0,1 % en poids
Aluminium (Al) : % en poids restant

2. Pièce de fixation (10, 10', 10", 10'", 10"") selon la revendication 1, dans laquelle la concentration de Scandium est comprise entre 0,10 et 0,20 pourcentage en poids.

3. Pièce de fixation (10, 10', 10", 10'", 10"") selon la revendication 2 dans laquelle la concentration de Scandium est 0,15 pourcentage en poids.

4. Pièce de fixation (10, 10", 10'") selon l'une quelconque des revendications précédentes, dans laquelle un filet de vis est formé sur une partie de la partie de la fixation.

5. Pièce de fixation (10, 10", 10'") selon l'une quelconque des revendications précédentes, dans laquelle la pièce de fixation est une vis, un goujon, un boulon, un écrou, un écrou de rivet aveugle ou un insert fileté aveugle ou un rivet aveugle.

6. Pièce de fixation (10) selon l'une quelconque des revendications précédentes, dans laquelle la pièce de fixation est un écrou de rivet aveugle (10) et un filet de vis est formé sur une surface intérieure d'un trou formé au centre de la pièce de fixation.

7. Pièce de fixation (10"') selon l'une quelconque des revendications précédentes, dans laquelle la pièce de fixation (10'") est un écrou à souder présentant une première surface adaptée à être soudée sur un premier composant et un filet de vis formé sur une surface intérieure d'un trou formé au centre de la pièce de fixation, dans laquelle le trou est adapté à recevoir le second composant.

8. Pièce de fixation (10') selon l'une quelconque des revendications précédentes, dans laquelle la pièce de fixation est une pièce de fixation auto-perceuse.

9. Pièce de fixation selon l'une quelconque des revendications 1 à 3, dans laquelle la pièce de fixation est un rivet auto-perceur (10').

10. Pièce de fixation (10, 10', 10", 10'", 10"") selon l'une quelconque des revendications précédentes, dans laquelle la résistance à la traction de la pièce de fixation est d'au moins 400 N/mm².

11. Pièce de fixation (10, 10', 10", 10'", 10"") selon l'une quelconque des revendications précédentes, dans laquelle la limite d'élasticité de la pièce de fixation est d'au moins 250 N/mm².

12. Pièce de fixation (10, 10', 10", 10'", 10"") selon l'une quelconque des revendications précédentes, dans laquelle la densité du matériau de la pièce de fixation est inférieure à 3 g/cm³.

13. Processus pour fabriquer une pièce de fixation selon l'une quelconque des revendications précédentes, dans lequel la pièce de fixation est formée par un processus de formage à froid.
